# NOUVEAU FASCICULE DE BREVET EUROPEEN

(11) **EP 2 020 388 B2**
(45) Date de publication et mention de la décision concernant l'opposition: **05.04.2017**
(45) Mention de la délivrance du brevet: 22.09.2010
(21) Numéro de dépôt: 08356113.4
(22) Date de dépôt: 29.07.2008
(51) Int. Cl.: B65G 1/00, B65G 1/04

(54) **Plateforme mobile de dépannage pour magasin de stockage automatisé**
Bewegliche Plattform zur Fehlerbehebung in einem automatisierten Lager
Mobile troubleshooting platform for automated storage warehouse

(30) Priorité: 02.08.2007 FR 0705665
(43) Date de publication de la demande: 04.02.2009
(73) Titulaire: SAVOYE, 21000 Dijon (FR)
(72) Inventeur: Strauss, Jean-Michel, 21000 Dijon (FR); Valentin, Fabrice, 51470 St Memmie (FR)
(74) Mandataire: Verriest, Philippe

(56) Documents cités:
- EP-B1- 1 103 494
- DD-A1- 252 815
- DE-A1- 2 939 615
- DE-C1- 10 038 666
- DE-U1- 8 210 739
- DE-U1-202005 002 880
- DE-U1-202005 007 319
- FR-A- 2 568 921
- US-A- 3 800 963

## Description

La présente invention se rapporte, de manière générale, au domaine technique des magasins de stockage automatisés, du genre de ceux comportant plusieurs niveaux desservis par au moins un mobile désigné comme transstockeur circulant dans un couloir, et comportant à chaque niveau, perpendiculairement au couloir, des rayonnages équipés de rails horizontaux sur lesquels se déplacent des véhicules automatiques de transfert, aptes à prendre en charge des palettes recevant des produits. Plus particulièrement, cette invention s'intéresse à une plateforme mobile de dépannage, spécialement destinée à un magasin de stockage automatisé du genre précédemment indiqué selon le préambule de la revendication 1. Une telle plateforme mobile est décrite dans le document DD 252815 A1. Le brevet US 3800963 donne un exemple de magasin de stockage automatisé du genre ici concerné.

Malgré son caractère automatisé, un tel magasin de stockage en service nécessite occasionnellement des interventions humaines en hauteur, notamment à l'intérieur de ses rayonnages, à des fins de dépannage ou d'inspection, par exemple pour venir libérer un véhicule de transfert coincé dans un rayonnage.

Pour réaliser de telles opérations dans les structures en hauteur des magasins de stockage, il existe déjà diverses solutions permettant d'accéder à la zone d'intervention. Les solutions actuellement utilisées comprennent notamment l'escalade avec un harnais, ou l'accès à l'aide d'une échelle ou d'un escabeau, ou encore la mise en place d'un platelage amovible qui s'appuie sur les rayonnages, depuis une passerelle jusqu'à la zone d'intervention. D'une manière générale, ces solutions connues demandent du temps et des efforts physiques au personnel d'intervention, sans que la sécurité de celui-ci soit pleinement assurée.

On connaît aussi quelques solutions plus mécanisées pour les interventions de dépannage ou de maintenance dans les magasins de stockage du genre ici concerné. Ces solutions sont en particulier celles décrites dans le brevet « est-allemand » DD 252815 A1 et dans le brevet allemand DE 10038666 C1.

Dans le cas du document DD 252815 A1, il est prévu une plateforme d'intervention, qui peut prendre place sur la nacelle du stransstockeur d'un magasin de stockage automatisé. Toutefois, cette plateforme ne possède aucune autonomie de déplacement et, en particulier, elle ne comporte aucun aménagement pour un déplacement horizontal dans des rayonnages d'un magasin de stockage, et aucun moyen de propulsion qui lui soit propre. Ainsi, la plateforme du document considéré se déplace uniquement dans le couloir dédié au déplacement du transstockeur ; elle ne peut pas s'écarter de ce couloir pour s'engager dans des rayonnages plus ou moins profonds, perpendiculaires à ce couloir. Cette solution n'est donc pas adaptée pour atteindre un point quelconque dans le magasin de stockage, en toute sécurité pour le ou les opérateurs.

De plus, la forme de cette plateforme, très allongée horizontalement dans le sens longitudinal du couloir parcouru par le transstockeur, rend ici inconcevable un engagement de ladite plateforme dans des rayonnages perpendiculaires au couloir, tels qu'ils sont habituellement dimensionnés.

Il est aussi à noter que la plateforme du document DD 252815 A1 est uniquement pourvue de galets de guidage qui coopèrent avec des rails verticaux du magasin de stockage, ce qui exclut tout déplacement horizontal autonome de cette plateforme.

Dans l'ensemble, ce document ne fournit donc qu'une solution très partielle, ne répondant pas au besoin d'accès sécurisé à l'intérieur des rayonnages d'un magasin de stockage.

Dans le cas du document DE 10038666 C1, il est prévu une plateforme de travail conçue comme un élément pouvant prendre la place d'une palette ordinaire. Cette plateforme est de type stationnaire, et non pas conçue comme un véhicule autonome. Elle est donc déplacée, et amenée à l'endroit où doit être effectuée une intervention, en utilisant les systèmes de déplacement préexistants dans le magasin de stockage, ce qui suppose que lesdits systèmes soient en parfait état de fonctionnement. Ainsi, une telle plateforme de travail est utilisable dans un magasin qui reste globalement en état de fonctionnement, par exemple pour procéder périodiquement à des opérations de maintenance courante. Par contre, la solution du document DE 10038666 C1 reste inadaptée, pour les opérations de dépannage et de réparation d'un magasin de dépannage, dont les équipements seraient momentanément défaillants.

Par ailleurs, la plateforme de travail de ce document est réglable en hauteur par un mécanisme d'élévation à « ciseaux », et elle peut aussi être déployée horizontalement sur une certaine distance limitée, mais cette dernière particularité ne rend pas la plateforme apte à atteindre un point quelconque dans des rayonnages de profondeur importante.

La présente invention vise à remédier à ces inconvénients, en fournissant une solution facilitant l'accès en tout point d'un magasin de stockage du genre ici considéré, en particulier dans les rayonnages, et permettant au personnel d'intervenir en toute sécurité tout en réduisant les temps d'intervention.

A cet effet, l'invention a essentiellement pour objet une plateforme mobile de dépannage pour magasin de stockage automatisé selon la revendication 1.

Ainsi, la solution proposée par la présente invention consiste en un petit véhicule de dépannage, un peu comparable à une draisine connue dans le domaine ferroviaire, qui dans le cas présent permet au personnel d'intervention de se déplacer dans les rayonnages d'un magasin de stockage automatisé, et de parvenir au plus près de la zone d'intervention. Pour ses déplacements dans les rayonnages, la plateforme mobile selon l'invention met à profit les rails préexistants de ces rayonnages, sur lesquels se déplacent normalement des véhicules automatiques de transfert. De plus, afin d'accéder au niveau désiré du magasin et au rayonnage voulu, la plateforme mobile de l'invention est avantageusement conçue pour être embarquée sur la nacelle d'un transstockeur du magasin de stockage concerné. Ainsi, la plateforme mobile de dépannage est déplacée dans une première direction horizontale et aussi verticalement au moyen du transstockeur, et elle se déplace elle-même dans une seconde direction horizontale, perpendiculaire à la première, à l'intérieur des rayonnages, ce qui lui permet d'atteindre véritablement tout point à l'intérieur du magasin de stockage. L'opérateur peut ainsi accéder à la zone d'intervention voulue, en se déplaçant à l'aide de la plateforme mobile, de façon rapide, sécurisée et confortablement. On comprend aussi que cette plateforme reste opérationnelle, même en cas de défaillance des véhicules de transfert des produits sur palettes.

Bien entendu, selon le type d'intervention à réaliser, l'opérateur peut aussi rester posté sur la plateforme durant l'intervention, ladite plateforme étant arrêtée au plus près de la zone d'intervention et servant alors aussi de plateforme de travail. De préférence, cette plateforme est équipée de moyens de freinage, permettant de la bloquer en position pendant tout le temps de l'intervention.

Cette plateforme mobile de dépannage offre aussi toute commodité pour amener des outils et/ou du matériel jusqu'à la zone d'intervention.

Dans un mode de réalisation simple de l'invention, la plateforme mobile de dépannage est une plateforme à propulsion manuelle et elle comporte une manivelle reliée, par des moyens mécaniques de transmission, à au moins une paire de roues motrices de cette plateforme. Les moyens mécaniques de transmission, qui relient la manivelle à l'axe des roues motrices, sont par exemple constitués par une chaîne sans fin.

Dans ce cas, les moyens de freinage peuvent comprendre une pince manoeuvrable à l'aide d'un levier et prévue pour bloquer ou libérer un arbre rotatif portant la manivelle.

L'ensemble des roues ou galets de la plateforme mobile comprend, avantageusement, au moins deux paires de roues porteuses et au moins deux paires de galets de guidage latéral de la plateforme. Dans un mode de réalisation préféré, la plateforme mobile comprend quatre paires de roues porteuses, associées deux par deux à la manière de bogies et séparées par un entraxe longitudinal suffisant pour permettre à la plateforme de franchir une interruption du chemin de roulement, par exemple lors du passage de la nacelle du transstockeur aux rails d'un rayonnage.

L'invention sera mieux comprise à l'aide de la description qui suit, en référence au dessin schématique annexé représentant, à titre d'exemple, une forme d'exécution de cette plateforme mobile de dépannage pour magasin de stockage automatisé :
Figure 1 est une vue générale en coupe verticale d'un magasin de stockage automatisé avec transstockeur, auquel est destinée la plateforme mobile de dépannage selon l'invention ;
Figure 2 est une vue d'ensemble, en perspective, de la plateforme mobile de dépannage ;
Figure 3 est une vue en coupe transversale de la plateforme mobile de la figure 2, montrant plus particulièrement ses moyens de propulsion manuelle ;
Figure 4 est une vue partielle en coupe suivant IV-IV de figure 3, montrant une partie des moyens de propulsion manuelle ;
Figure 5 est une vue de côté de la plateforme mobile, illustrant le franchissement par celle-ci d'une interruption du chemin de roulement ;
Figure 6 illustre une position d'intervention de cette plateforme mobile, dans un rayonnage de magasin de stockage.

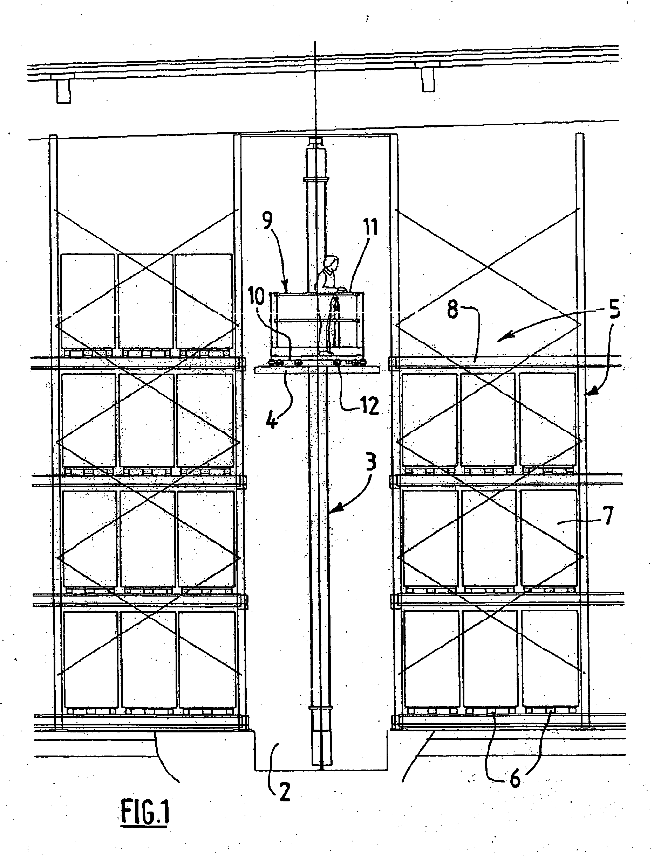

Pour situer le contexte de l'invention, la figure 1 rappelle la structure possible d'un magasin de stockage automatisé, à niveaux multiples.

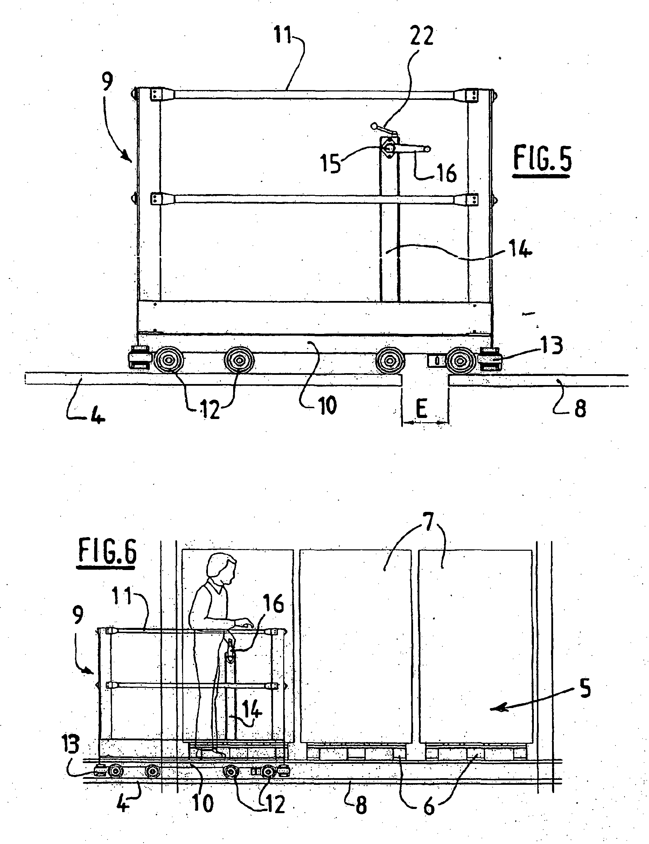

Ce magasin de stockage comporte au moins un couloir 2, dans lequel circule horizontalement un transstockeur 3 pourvu d'une nacelle 4 mobile verticalement de manière à desservir les différents niveaux du magasin. Des rayonnages 5 sont prévus à chaque niveau du magasin, ces rayonnages 5 débouchant dans le couloir 2 et s'étendant perpendiculairement à ce couloir 2. Chaque rayonnage 5 peut recevoir, en des emplacements déterminés, plusieurs palettes 6 sur lesquelles sont posés des produits 7 (voir aussi figure 6). De manière connue en soi, chaque rayonnage 5 est équipé d'un chemin de roulement longitudinal, constitué par deux rails horizontaux parallèles 8, prévus pour la circulation de véhicules automatiques de transfert (non représentés) aptes à prendre en charge une palette 6 avec son chargement.

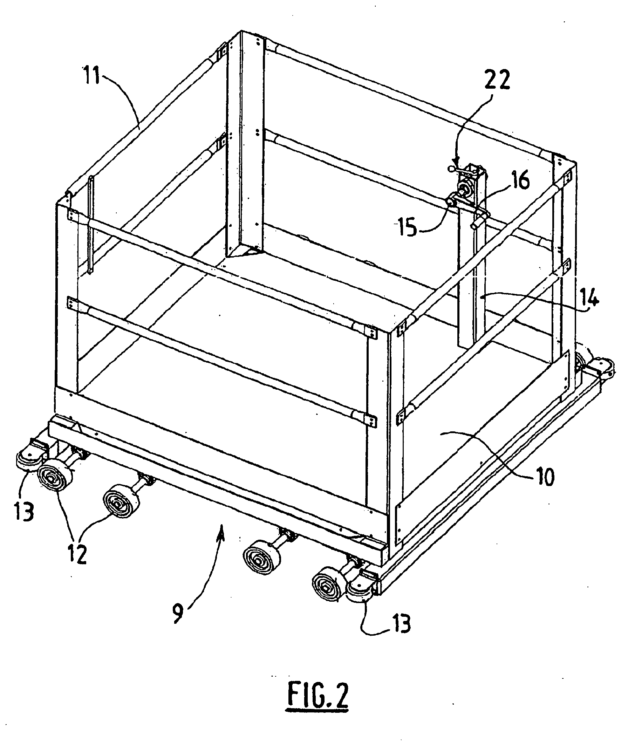

Selon l'invention, les rails horizontaux 8 des rayonnages 5 du magasin de stockage sont aussi utilisés comme voie de roulement pour une plateforme mobile de dépannage, désignée dans son ensemble par la référence 9, et représentée plus particulièrement sur les figures 2 à 5.

La plateforme mobile de dépannage 9 comporte un plateau 10 horizontal, rectangulaire, qui est ainsi équipé sur ses quatre côtés de garde-corps 11, et qui est ainsi conçu pour transporter en sécurité du personnel d'intervention.

Sur le plateau 10 sont montées, latéralement, huit roues porteuses 12 réparties en quatre paires de roues ou essieux, ces roues 12 étant prévues pour être introduites et se déplacer sur ou dans les rails horizontaux 8 des rayonnages 5, l'écartement des roues 12 correspondant à celui des rails 8. Un ou deux essieux de roues porteuses 12 sont aussi des essieux moteurs, comme expliqué plus bas.

En ce qui concerne la répartition des roues porteuses 12, les quatre essieux sont associés deux par deux à la manière de bogies avec un entraxe longitudinal (voir figure 5) suffisant pour permettre à la plateforme mobile 9 de franchir toute interruption E du chemin de roulement, en particulier lors du passage de la nacelle 4 du transstockeur 3 aux rails 8 d'un rayonnage 5.

La plateforme mobile 9 comporte aussi, montés aux quatre angles du plateau 10, respectivement quatre galets de guidage 13 d'axe vertical.

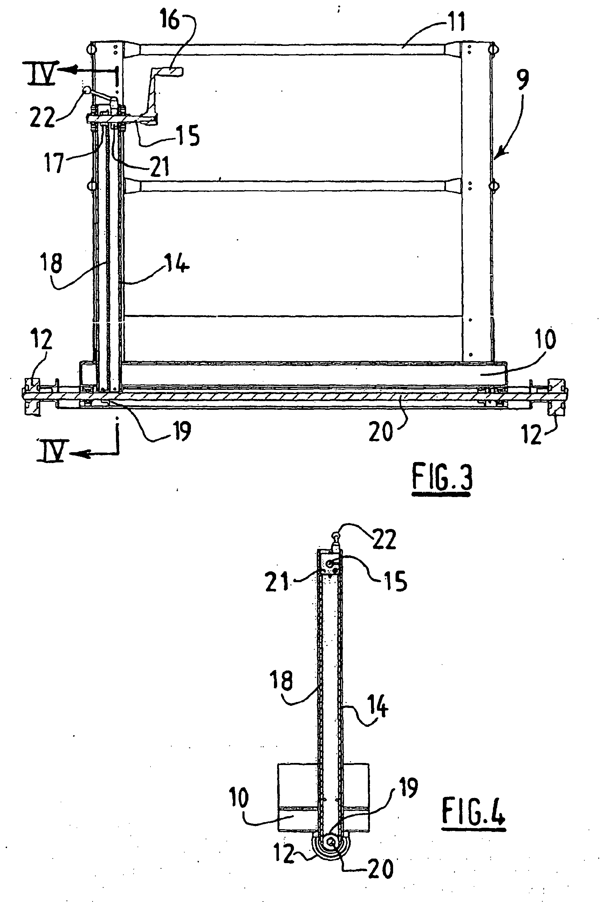

Dans l'exemple illustré, s'agissant d'une plateforme mobile 9 à propulsion manuelle, celle-ci comporte une colonne 14 s'élevant au-dessus du plateau 10 et portant, à son sommet, un arbre horizontal rotatif 15 qui porte une manivelle 16. Comme le montrent en particulier les figures 3 et 4, l'arbre rotatif 15 porte aussi une roue dentée 17, reliée par l'intermédiaire d'une chaîne sans fin de transmission 18 logée dans la colonne 14 à une autre roue dentée 19, calée sur l'axe 20 de l'un des essieux, c'est-à-dire d'une paire de roues 12. La manivelle 16 est ainsi capable de transmettre son mouvement de rotation, dans un sens ou dans l'autre, jusqu'aux roues 12 utilisées comme roues motrices de la plateforme mobile 9.

A ce dispositif de propulsion est associé un dispositif de freinage, qui comprend une pince 21 manoeuvrable à l'aide d'un levier 22, le dispositif de freinage étant placé au sommet de la colonne 14 et agissant, selon la position du levier 22, en bloquant ou en libérant l'arbre rotatif 15 qui porte la manivelle 16.

Lorsqu'une intervention, notamment une inspection ou un dépannage, est nécessaire dans un rayonnage 5, la plateforme mobile 9 est d'abord chargée sur la nacelle 4 du transstockeur 3, puis le transstockeur 3 est déplacé horizontalement et sa nacelle 4 est déplacée verticalement, pour amener cette nacelle 4 en face de l'entrée du rayonnage 5 dans lequel il est décidé d'intervenir, par exemple un rayonnage 5 du niveau supérieur comme l'illustre la figure 1. La plateforme mobile 9 est alors déplacée horizontalement par l'opérateur, par actionnement de la manivelle 16, pour s'engager sur les rails horizontaux 8 du rayonnage 5 concerné, comme l'illustre la figure 6. Ainsi, la plateforme mobile 9 est avancée plus ou moins profondément à l'intérieur du rayonnage 5, jusqu'à atteindre la zone d'intervention (correspondant par exemple à l'emplacement médian sur la figure 6). Une fois la zone d'intervention atteinte, la plateforme mobile 9 est immobilisée sur les rails 8 au moyen de son dispositif de freinage 21, 22, et elle est ainsi maintenue arrêtée durant tout le temps que nécessite l'intervention à réaliser.

Après achèvement de cette intervention, la plateforme mobile 9 est défreinée et ramenée en arrière, dégageant ainsi le rayonnage 5 concerné par l'intervention réalisée.

Lorsqu'elle n'est pas utilisée, la plateforme mobile de dépannage 9 peut être remisée dans un emplacement de garage, par exemple situé à un niveau bas, d'où elle est extraite seulement en cas de besoin.

Dans l'ensemble, la plateforme mobile 9 permet de se déplacer et d'intervenir dans des structures s'étendant en hauteur, et cette plateforme est applicable en particulier dans l'exploitation et la maintenance d'installations de stockage plus ou moins vastes, ces installations pouvant bien entendu comporter des caractéristiques différentes de celles du magasin représenté à titre de simple exemple sur les figures 1 et 6.

On ne s'éloignerait pas du cadre de l'invention, telle que définie dans les revendications annexées :
- en réalisant la transmission de mouvement de la manivelle aux roues motrices par tous moyens : courroies, ligne d'arbres avec renvoi d'angle, etc. ;
- en prévoyant un autre sytème de freinage, par exemple par blocage direct ou par soulévement des roues motrices ;
- en prévoyant sur cette plateforme mobile tous accessoires et équipements, tels qu'un dispositif d'éclairage, pour éclairer la zone d'intervention et faciliter ainsi le travail des intervenants ;
- en prévoyant les déplacements notamment verticaux de la plateforme sur un dispositif mobile autre qu'un transstockeur, par exemple sur un ascenseur équipant le magasin de stockage concerné.

## Revendications

1. Plateforme mobile de dépannage pour magasin de stockage automatisé, du genre de ceux comportant plusieurs niveaux desservis par au moins un transstockeur (3) circulant dans un couloir (2), des rayonnages (5) étant prévus à chaque niveau, perpendiculairement au couloir (2), et débouchant dans celui-ci, la plateforme (9) étant destinée à amener le personnel d'intervention dans les rayonnages d'un tel magasin, **caractérisée en ce que** les rayonnages (5) sont équipés de rails horizontaux (8) sur lesquels se déplacent des véhicules automatiques de transfert et **en ce que** la plateforme se présente comme un véhicule comportant un dispositif de propulsion manuelle (14 à 20) qui comporte un plateau horizontal (10) équipé de garde-corps (11) et muni latéralement de roues et/ou de galets (12, 13) prévus pour coopérer avec les rails horizontaux (8) des rayonnages (5) du magasin de stockage.

2. Plateforme mobile de dépannage selon la revendication 1, **caractérisée en ce qu'**elle est conçue pour être embarquée sur la nacelle (4) du transstockeur (3) du magasin de stockage concerné afin d'accéder au niveau désiré du magasin et au rayonnage (5) voulu.

3. Plateforme mobile de dépannage selon la revendication 1 ou 2, **caractérisée en ce qu'**au dispositif de propulsion est associé un dispositif de freinage (21, 22), permettant de la bloquer en position.

4. Plateforme mobile de dépannage selon l'une des revendications 1 à 3, **caractérisée en ce qu'**elle comporte une manivelle (16) reliée, par des moyens mécaniques de transmission (17, 18, 19), à au moins une paire de roues motrices (12) de cette plateforme (9).

5. Plateforme mobile de dépannage selon l'ensemble des revendications 3 et 4, **caractérisée en ce que** le dispositif de freinage comprend une pince (21) manoeuvrable à l'aide d'un levier (22) et prévue pour bloquer ou libérer un arbre rotatif (15) portant la manivelle (16).

6. Plateforme mobile de dépannage selon l'une des revendications 1 à 5, **caractérisée en ce qu'**elle comprend au moins deux paires de roues porteuses (12) et au moins deux paires de galets de guidage latéral (13) de la plateforme (9).

7. Plateforme mobile de dépannage selon la revendication 6, **caractérisée en ce qu'**elle comprend quatre paires de roues porteuses (12) associées deux par deux à la manière de bogies et séparées par un entraxe longitudinal suffisant pour permettre à la plateforme (9) de franchir une interruption (E) du chemin de roulement, par exemple lors du passage de la nacelle (4) du transstockeur (3) aux rails (8) d'un rayonnage (5).

8. Plateforme mobile de dépannage selon l'une des revendications 1 à 7, **caractérisée en ce qu'**elle est équipée d'un dispositif d'éclairage.

## Patentansprüche

1. Mobile Plattform zur Störungsbehebung für ein automatisiertes Lagermagazin von der Art, die mehrere von mindestens einem Regalbediengerät (3) bediente Ebenen enthält, das in einem Gang (2) umläuft, wobei in jeder Ebene Regale (5) lotrecht zum Gang (2) vorgesehen sind und in diesen münden, wobei die Plattform (9) dazu bestimmt ist, das Einsatzpersonal in die Regale eines solchen Magazins zu bringen, **dadurch gekennzeichnet, dass** die Regale (5) mit waagrechten Schienen (8) ausgestattet sind, auf denen sich automatische Transferfahrzeuge bewegen, und dass die Plattform sich als ein Fahrzeug mit manuellem Antrieb (14 bis 20) präsentiert, das eine waagrechte Platte (10) aufweist, die mit einer Reling (11) ausgestattet und seitlich mit Rädern und/oder Rollen (12, 13) versehen ist, die vorgesehen sind, um mit den waagrechten Schienen (8) der Regale (5) des Lagermagazins zusammenzuwirken.

2. Mobile Plattform zur Störungsbehebung nach Anspruch 1, **dadurch gekennzeichnet, dass** sie konzipiert ist, um auf die Gondel (4) des Regalbediengeräts (3) des betroffenen Lagermagazins verladen zu werden, um auf die gewünschte Ebene des Magazins und zum richtigen Regal (5) zu gelangen.

3. Mobile Plattform zur Störungsbehebung nach Anspruch 1 oder 2, **dadurch gekennzeichnet, dass** sie mit Bremseinrichtungen (21, 22) versehen ist, die es ermöglichen, sie in Stellung zu blockieren.

4. Mobile Plattform zur Störungsbehebung nach einem der Ansprüche 1 bis 3, **dadurch gekennzeichnet, dass** sie eine Handkurbel (16) aufweist, die über mechanische Übertragungseinrichtungen (17, 18,19) mit mindestens einem Paar von Antriebsrädern (12) dieser Plattform (9) verbunden ist.

5. Mobile Plattform zur Störungsbehebung nach der Gesamtheit der Ansprüche 3 und 4, **dadurch gekennzeichnet, dass** die Bremseinrichtungen eine Klammer (21) enthalten, die mit Hilfe eines Hebels (22) betätigbar und vorgesehen ist, um eine Drehwelle (15) zu blockieren oder freizugeben, die die Handkurbel (16) trägt.

6. Mobile Plattform zur Störungsbehebung nach einem der Ansprüche 1 bis 5, **dadurch gekennzeichnet, dass** sie mindestens zwei Paar von Stützrädern (12) und mindestens zwei Paare von Rollen (1 3) zur seitlichen Führung der Plattform (9) aufweist.

7. Mobile Plattform zur Störungsbehebung nach Anspruch 6, **dadurch gekennzeichnet, dass** sie vier Paare von Stützrädern (12) aufweist, die einander paarweise nach Art von Drehgestellen zugeordnet und durch einen ausreichenden Längsachsabstand getrennt sind, um es der Plattform (9) zu erlauben, eine Unterbrechung (E) des Fahrwegs zu überqueren, zum Beispiel beim Übergang von der Gondel (4) des Regalbediengeräts (3) auf die Schienen (8) eines Regals (5).

8. Mobile Plattform zur Störungsbehebung nach einem der Ansprüche 1 bis 7, **dadurch gekennzeichnet, dass** sie mit einer Beleuchtungsvorrichtung ausgestattet ist.

## Claims

1. Mobile troubleshooting platform for an automated storage warehouse, of the kind which comprise several levels served by at least one storage and retrieval machine (3) running in a lane (2), shelving (5) being provided at each level, at right angles to the lane (2) and opening there into, the platform (9) being intended to convey maintenance personnel into the shelving systems of such a warehouse, **characterized in that** the shelving (5) is equipped with horizontal rails (8) on which automatic transfer vehicles run, and **in that** the platform is in the form of a manually propelled (14 to 20) vehicle which comprises a horizontal plate (10) equipped with guard rails (11) and provided at the side with wheels and/or rollers (12, 13) designed to collaborate with the horizontal rails (8) of the shelving (5) of the storage warehouse.

2. Mobile troubleshooting platform according to Claim 1, **characterized in that** it is designed to be loaded onto the gondola (4) of the storage and retrieval machine (3) of the storage warehouse concerned so as to access the desired level of the warehouse and the required set of shelving (5).

3. Mobile troubleshooting platform according to Claim 1 or 2, **characterized in that** it is equipped with braking means (21, 22) allowing it to be immobilized in position.

4. Mobile troubleshooting platform according to one of Claims 1 to 3, **characterized in that** it comprises a cranking handle (16) connected, by mechanical transmission means (17, 18, 19), to at least one pair of driven wheels (12) of this platform (9).

5. Mobile troubleshooting platform according to the combination of Claims 3 and 4, **characterized in that** the braking means comprise a clamp (21), operable using a lever (22), and designed to immobilize or release a rotary shaft (15) bearing the cranking handle (16).

6. Mobile troubleshooting platform according to one of Claims 1 to 5, **characterized in that** it comprises at least two pairs of bearing wheels (12) and at least two pairs of lateral guidance rollers (13) for guiding the platform (9).

7. Mobile troubleshooting platform according to Claim 6, **characterized in that** it comprises four pairs of bearing wheels (12) associated in pairs in the manner of bogies and separated by a longitudinal inter-axis distance that is long enough to allow the platform (9) to negotiate an interruption (E) in the runway track, for example when the gondola (4) of the storage and retrieval machine (3) passes onto the rails (8) of a set of shelving (5).

8. Mobile troubleshooting platform according to one of Claims 1 to 7, **characterized in that** it is equipped with a lighting device.
